(19) Europäisches Patentamt
European Patent Office
Office européen des brevets

(11) **EP 1 907 803 B1**

(12) **EUROPÄISCHE PATENTSCHRIFT**

(45) Veröffentlichungstag und Bekanntmachung des Hinweises auf die Patenterteilung:
**28.10.2009 Patentblatt 2009/44**

(51) Int Cl.:
**G01F 23/24** *(2006.01)*       **G01F 13/00** *(2006.01)*
**B01D 35/143** *(2006.01)*

(21) Anmeldenummer: **06762797.6**

(22) Anmeldetag: **25.07.2006**

(86) Internationale Anmeldenummer:
**PCT/EP2006/007306**

(87) Internationale Veröffentlichungsnummer:
**WO 2007/012455 (01.02.2007 Gazette 2007/05)**

(54) **MESSVORRICHTUNG UND LEITFÄHIGKEITSMESSVORRICHTUNG FÜR DIE BESTIMMUNG VON DURCHFLUSSMENGEN ELEKTRISCH LEITENDER FLÜSSIGKEITEN, MESSELEMENT UND VERFAHREN**

MEASURING DEVICE AND CONDUCTIVITY MEASURING DEVICE FOR DETERMINING FLOW CAPACITIES OF ELECTROCONDUCTIVE LIQUIDS, MEASURING ELEMENT, AND METHOD

DISPOSITIF DE MESURE ET DISPOSITIF DE CONDUCTOMETRIE SERVANT A DETERMINER DES DEBITS DE LIQUIDES ELECTROCONDUCTEURS, ELEMENT DE MESURE ET PROCEDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.07.2005 DE 102005035045**

(43) Veröffentlichungstag der Anmeldung:
**09.04.2008 Patentblatt 2008/15**

(73) Patentinhaber: **Brita GmbH**
**65232 Taunusstein (DE)**

(72) Erfinder: **THOBE, Bernhard**
**30890 Baringhausen (DE)**

(74) Vertreter: **Fuchs**
**Patentanwälte**
**Söhnleinstrasse 8**
**65201 Wiesbaden (DE)**

(56) Entgegenhaltungen:
**EP-A1- 1 125 748     GB-A- 1 288 177**

EP 1 907 803 B1

**Beschreibung**

Die Erfindung bezieht sich auf eine Messvorrichtung zur Bestimmung von Durchflussmengen dV(z) elektrisch leitender Flüssigkeiten mit der Leitfähigkeit LF durch einen Behälter bei sich in vertikaler Richtung (z-Richtung) verändernden Füllstandshöhen mit

- einem eine Bodenwand und Zu- und Ablauf aufweisenden Behälter und mit

- einer Leitfähigkeitsmessvorrichtung, die folgende Komponenten umfasst:

  ■ eine Spannungsquelle

  ■ eine Auswerteeinrichtung und

  ■ mindestens ein Messelement,

  • das im Behälter angeordnet ist und an die Auswerteeinrichtung angeschlossen ist und

  • das mindestens zwei sich in z-Richtung erstreckende Elektroden aufweist, die senkrecht zur z-Richtung beabstandet zueinander angeordnet sind, wobei $z_{max}$ die Entfernung vom unteren ersten Elektrodenende (z = 0) zum oberen zweiten Elektrodenende bezeichnet.

Die Messung von Füllstandshöhen wird überall dort durchgeführt, wo Flüssigkeitsvolumina bzw. Änderungen der Flüssigkeitsvolumina zu ermitteln sind. Die Messung der Füllstandshöhen erfolgt üblicherweise mittels Elektroden, die in die Flüssigkeit teilweise eintauchen. Über eine geeignete Messartordnung wird der Widerstand bzw. die elektrische Leitfähigkeit der Flüssigkeit gemessen, die u. a. proportional der Füllstandshöhe bzw. des Flüssigkeitsvolumens ist.

Hierbei wird die physikalische Beziehung $LF = \delta_0 \cdot ZK \cdot V$ ausgenutzt, wobei $LF$ die elektrische Leitfähigkeit, $\delta_0$ die spezifische Leitfähigkeit der Flüssigkeit, V das Volumen der Flüssigkeit und ZK die so genannte Zellkonstante bezeichnen, die sich aus dem Verhältnis des Elektrodenabstandes und der benetzten Elektrodenfläche berechnet.

Da die spezifische Leitfähigkeit $\delta_0$ die Steigung der Messkurve (Messwerte in Abhängigkeit vom Füllvolumen) beeinflusst, muss vor der Füllstandsmessung zunächst eine Kalibriermessung zur Ermittlung dieser jeweiligen spezifischen Leitfähigkeit durchgeführt werden. Diester Vorgang erfordert einen zusätzlichen Aufwand, der möglichst vermieden werden soll.

Aus der DE 197 26 044 A1 ist ein Flüssigkeitsstandsanzeiger, insbesondere für Pflanzgefäße bekannt, der einen langgestreckten Stab mit mindestens zwei gegeneinander isolierten Elektroden und eine elektronische Schaltung umfasst, die mit den Elektroden über in dem Stab verlaufende Leiter verbunden und von einer Gleichspannungsquelle gespeist ist. Eine Anzeigeeinrichtung gibt den Flüssigkeitsstand an. Dieser Füllstandsanzeiger erfordert mehrere Elektroden, die in unterschiedlichen Höhen angeordnet sind. Jede Elektrode ist mit einem eigenen Leiter mit der elektronischen Schaltung verbunden. Dies erfordert einen entsprechend hohen Installationsaufwand.

In der DE 40 42 257 wird ein Verfahren und eine Vorrichtung zur Ermittlung von Füllstand und Pegelhöhen von elektrisch leitenden Flüssigkeiten beschrieben. Hierzu wird beispielsweise eine Widerstandskette verwendet, die vertikal in die Flüssigkeit eintaucht. Aus der Messung des Widerstandes der Gesamtanordnung lässt sich ermitteln, wie viele Widerstände oberhalb des Flüssigkeitsspiegels liegen.oder, was gleichbedeutend ist, in welcher Tiefe der Flüssigkeitsspiegel liegt, da die Metallflächen längs des Pegels in einem engen und konstanten Abstand angebracht sind. Auch diese Anordnung ist aufwändig und vermittelt lediglich diskrete Werte des Füllstandes.

Aus der DE 30 18 718 ist eine Füllstandselektrodenvorrichtung bekannt, die ebenfalls einzelne Füllstandselektroden aufweist, die an einem Träger in Trägerlängsrichtung stufenlos verschiebbar angeordnet sind.

Aus der JP 08050047 A ist eine Elektrodenanordnung mit mehreren Elektroden bekannt, mit der der elektrische Widerstand der Flüssigkeit zur Bestimmung der Füllstandshöhe gemessen wird.

Aus der JP 2004077439 A ist eine Messelektrode zur Bestimmung des Flüssigkeitsstandes bekannt, die eine konische oder halbkugelförmige Ausgestaltung aufweist. Der kleine Durchmesser der Elektrode befindet sich am unteren Abschnitt und der große Durchmesser der Elektrode am oberen Ende.

Füllstandsmessungen werden insbesondere auch in Wasserfiltereinrichtungen durchgeführt, wobei die Füllstandsmessungen zur Bestimmung der Erschöpfung des Flltermittels der Filterkartusche herangezogen werden. Eine solche Erschöpfungsanzeige ist beispielsweise aus der EP 1 484 097 A1 bekannt. Diese Erschöpfungsanzeige basiert auf Widerstandsmessungen der Flüssigkeit mit zwei Elektroden, die im Wasserbehälter übereinander angeordnet sind oder die sich im Zulaufkanal befinden. Diese Vorrichtung hat den Nachteil, dass bei wechselnder Wasserqualität Kalibrierrmessungen erforderlich sind.

Aus der WO 01/74719 ist ebenfalls eine Erschöpfungsanzeige bekannt, bei der mehrere Elektroden zum Einsatz kommen, die in die Flüssigkeit eintauchen. An der Wasserfiltereinrichtung ist eine Auswerteeinheit zur Ermittlung der erfassten Füllvolumina über eine bestimmte Zeitdauer angeordnet, die wiederum mit einer Anzeigeeinheit, der so genannten Erschöpfungsanzeige, verbunden ist. Bei solchen Wasserfiltereinrichtungen wird Rohwasser in den Einlauftrichter eingefüllt, das durch die Filterkartusche nach unten abläuft und in einer unteren Kammer als gefiltertes Wasser gesammelt wird. Durch den abwechselnden Zulauf und Ablauf des Rohwassers ändert sich der Füllstand während der Lebensdauer einer Filterkartusche vielfach, so dass aus diesen Füllstandsänderungen auf die durch die Filterkartusche geströmte Flüssigkeitsmenge geschlossen werden kann. Anhand der Flüssigkeitsmenge wird über die Erschöpfungsanzeige eine Aussage über die Erschöpfung des Filtermittels gemacht

Die EP 1 125 748 A1 beschreibt eine Druckerpatrone, die mit einer Füllstandsmessvorrichtung versehen ist. In der Druckerpatrone befinden sich zwei Elektroden, mittels derer die Füllstandshöhe gemessen wird, wobei die Messwerte mittels einer Korrelations- und einer Koeffizententabelle ausgewertet werden.

Die GB 1.288.177 beschreibt eine Füllstandsmesseinnchtung, die drei Elektroden aufweist. Hiervon ist die dritte, mittlere Kollektorelektrode schräg angeordnet, so dass sich der Abstand zwischen der Kollektorelektrode und der Referenzelektrode in vertikaler Richtung ändert. Der Kollektor kann plattenförmig ausgebildet sein und eine logarithmische Messfunktion aufweisen.

Aufgabe der Erfindung ist es daher, eine Messvorrichtung bereitzustellen, die einfach aufgebaut ist und die Kalibriermessungen bezüglich der spezifischen Leitfähigkeit der Flüssigkeit überflüssig macht. Es ist auch Aufgabe, ein einfach aufgebautes und handhabbares Messelement und ein Messverfahren anzugeben.

Diese Aufgabe wird mit einer Messvorrichtung gelöst, die dadurch gekennzeichnet ist, dass die Leitfähigkeitsmessvorrichtung in zeitlichen Abständen

$$t_i - t_{i-1} \text{ mit i = 1 ... n Messwerte } M_{t_i}(V) = M(V(z)) \sim LF \cdot f_M(V(z)) \text{ liefert,}$$

dass mindestens der Behälter (5) und/oder die Leitfähigkeitsmessvorrichtung derart ausgelegt ist/sind, dass er/sie durch mindestens eine von V(z) abhängige Parameterfunktion $f_{P_l}(V(z))$ mit l = 1... m beschreibbar ist/sind,
so dass gilt:

$$f_M(V(z)) \sim f\left(f_{P_l}(V(z) \text{ mit l = 1... m})\right) \sim b_M^{V(z)}$$

wobei $b_M$ eine Zahl $\neq 0$ und $\neq 1$ ist,
und dass die Auswertevorrichtung mindestens zur Quotientenbildung der Messwerte und zum Logarithmieren der Quotienten ausgebildet ist.

Die z-Richtung wird senkrecht zum Flüssigkeitsspiegel im Flüssigkeitsbehälter gewählt. Der Exponent kann ein positives oder negatives Vorzeichen besitzen.

Die Erfindung geht von der Erkenntnis aus, dass zur Bestimmung von Durchflussmengen elektrisch leitender Flüssigkeiten durch einen Behälter weder der Wert der Leitfähigkeit der Flüssigkeit bekannt sein muss noch der Absolutwert der Höhe des Flüssigkeitsspiegels bestimmt werden muss, wenn durch die konstruktive Gestaltung der Messvorrichtung ein exponentieller Zusammenhang zwischen dem Messwert $M_{t_1}(V(z))$ und dem Volumen V(z) der Flüssigkeit im Behälter hergestellt wird.

Es hat sich gezeigt, dass es hierfür verschiedene konstruktive Lösungen gibt, die sich in allgemeiner Form durch Parameterfunktionen darstellen lassen.

Unter einer Parameterfunktion $f_{P_l}$ (l beschreibt den Laufindex, d. h. $f_{P_1}$, $f_{P_2}$ usw.) wird ein Konstruktionsparameter verstanden, der eine funktionelle Abhängigkeit von V(z) und damit von z aufweist. Beispiele solcher Parameter $P_l$ sind jeweils in Abhängigkeit von z die Behälterform, die Elektrodenform, der Abstand der Elektroden und Eigenschaften des Elektrodenmaterials. Der Abstand der Elektroden kann der räumliche Abstand der beiden Elektroden oder auch der für die elektrischen Feldlinien relevante Abstand sein. Im letztgenannten Fall können die beiden Elektroden direkt beieinander liegen, wenn zwischen den Elektroden ein Hindernis angeordnet ist, das die Weglänge der elektrische Feldlinien verändert.

Gemäß einer besonderen Ausführungsform ist zwischen den beiden Elektroden mindestens ein Element angeordnet, das die Wegstrecke der zwischen den beiden Elektroden sich ausbildenden elektrischen Feldlinien verändert.

Es kann sich bei diesem Element um einen Bestandteil des Trägerelementes handeln, auf dem die beiden Elektroden angeordnet sind oder um ein zusätzliches Element, das auf dem Trägerelement angeordnet ist. Hierbei ist es wesentlich, dass das Element eine Gestalt aufweist, so dass sich die Wegstrecke der Feldlinien mit zunehmenden Wert z exponentiell verändert.

Vorzugweise weist das Element eine Gestalt auf, so dass die Wegstrecke der elektrischen Feldlinien mit zunehmenden Wert z abnimmt.

Gemäß einer bevorzugten Ausführungsform ist das Element eine Platte, deren freie Vorderkante einen gekrümmten Verlauf aufweist.

Die beiden Elektroden können nebeneinander auf dem Trägerelement angeordnet sein, wobei die Platte zwischen den beiden Elektroden angeordnet ist.

Gemäß einer weiteren Ausführungsform sind die Elektroden auf gegenüberliegenden Seiten auf dem Trägerelement angeordnet und seitlich benachbart zu jeder Elektrode ist eine solche Platte angeordnet, die die Wegstrecke der Feldlinien zwischen den Elektroden verändert.

Vorzugsweise kann die Platte senkrecht zum Trägerelement angeordnet sein. Die Ausrichtung dieser Hindernisplatten richtet sich nach der Ausgestaltung des Trägerelementes und der Anordnung der Elektroden auf dem Trägerelement. Es ist daher auch bevorzugt, dass bei gegenüberliegender Anordnung der Elektroden auf einem Trägerelement die Platten parallel zum Trägerelement angeordnet sein können.

Wenn, wie dies im Stand der Technik der Fall ist, alle Parameter $P_I$ einen linearen Zusammenhang aufweisen, z. B. der Behälter ein Zylinder ist, der Abstand der Elektroden konstant gewählt ist, die Fläche der Elektroden konstant ist und das Elektrodenmaterial über die gesamte Länge einheitlich gewählt wird, sind zur Bestimmung der Durchflussmengen sowohl die Kenntnis der Leitfähigkeitswerte der Flüssigkeit als auch die der absoluten Füllstandshöhe erforderlich.

Es hat sich gezeigt, dass mindestens eine Parameterfunktion $f_{P_1}$ eine exponentielle Abhängigkeit aufweisen muss, um sowohl von der Kenntnis der Leitfähigkeit der Flüssigkeit als auch von der Kenntnis der absoluten Füllstandshöhe unabhängig zu werden.

In allgemeiner Form lässt sich der Zusammenhang für z. B. vier Parameterfunktionen in einer Matrix darstellen, wobei mit "beliebig" eine beliebige funktionale Abhängigkeit gemeint ist, wobei allerdings eine Funktion, insbesondere eine logarithmische Funktion, ausgeschlossen ist, die gegebenenfalls die exponentielle Abhängigkeit einer anderen Parameterfunktion aufheben könnte.

| Messwert M(V(z)) | $f_{P_1}$ | $f_{P_2}$ | $f_{P_3}$ | $f_{P_4}$ |
|---|---|---|---|---|
| exponentiell | exponentiell | beliebig | beliebig | beliebig |
| exponentiell | beliebig | exponentiell | beliebig | beliebig |
| exponentiell | beliebig | beliebig | exponentiell | beliebig |
| exponentiell | beliebig | beliebig | beliebig | exponentiell |

Es können auch mehr als eine Parameterfunktion $f_{P_1}$ einen exponentiellen oder teilexponentiellen Zusammenhang aufweisen. Hierbei ist zu beachten, dass sich für M(V(z)) in Abhängigkeit von V(z) und damit von z ein exponentieller Zusammenhang einstellt.

Der Vorteil des exponentiellen Zusammenhangs besteht darin, dass sich bei einem Anstieg des Füllvolumens um einen bestimmten Betrag der Messwert $M_{t_i}(V(z)) \sim b_M{}^{V(z)}$ jeweils um den gleichen Faktor ändert mit der Folge, dass bei der Bestimmung von Volumenänderungen der jeweilige Leitfähigkeitswert der Flüssigkeit sowie die beiden Höhen des Flüssigkeitsspiegels, zwischen denen die Volumenänderung stattfindet, keine Rolle spielen.

Gemäß einer besonderen Ausführungsform ist daher vorgesehen, dass für mindestens eine Parameterfunktion gilt:

$$f_{P_I}(V(z)) \sim b_{P_I}{}^{V(z)} \ .$$

Der Basiswert $b_{P_1}$ ist derart zu wählen, dass sich geringe Volumenänderungen der Flüssigkeit auch in einer signifikanten Änderung der Messwerte bemerkbar machen. Die Wahl des Basiswertes $b_{P_1}$ hängt auch davon ab, in welcher Einheit z gemessen wird. Alle Angaben beziehen sich immer auf z gemessen in cm, auch wenn dies nachfolgend nicht ausdrücklich erwähnt wird. Dementsprechend sind Flächen in $cm^2$ und Volumen in $cm^3$ zu berücksichtigen.

Es ist bevorzugt, $b_{P_1}$ im Bereich von $0 < b_{P_1} \leq 5$, insbesondere von $1 < b_{P_1} \leq 1,5$ zu wählen mit $b_{P_1} \neq 1$.

Gemäß einer bevorzugten Ausführungsform ist der Parameter $P_I$ die Fläche A mindestens einer Elektrode. A(V(z)) ist die mit der Flüssigkeit benetzte leitende Elektrodenfläche, die sich mit steigendem oder fallendem Volumen gemäß ihrer konstruktiven Ausgestaltung verändert. Für die Fläche A gilt $A(V(z)) = f_{P_1}(V(z)) \sim b_{A_1}^{V(z)}$. In diesem Fall können die übrigen Parameterfunktionen, wie z. B. die Parameterfunktion, die die Behälterform beschreibt, einen linearen Zusammenhang aufweisen. Insofern kann beispielsweise der Flüssigkeitsbehälter ein Zylinder, Würfel oder Quader sein.

Gemäß einer weiteren Ausführungsform ist der Parameter $P_I$ die das Füllvolumen bestimmende Behälterform F, für die gilt: $F(V(z)) = f_{P_1}(V(z)) \sim b_F^{V(z)}$. Die Funktion F(V(z)) reduziert sich vorzugsweise auf eine Funktion des Querschnittes Q(z), wobei $F(V(z)) = \int_0^z Q(z)dz$ ist.

Beispielsweise in einem Flüssigkeitsbehälter mit kleinerer Querschnittsfläche führen geringe Volumenänderungen zu einer deutlichen Änderung in der Füllstandshöhe, so dass $b_F$ klein gewählt werden kann, z. B. im Bereich kleiner 2,5.

Bei Behältern mit großer Querschnittsfläche sind die Verhältnisse umgekehrt. Um eine entsprechende Messgenauigkeit bei einer vergleichbaren Volumenänderung zu erzielen, ist daher $b_F$ größter zu wählen, z. B. größter 2,5.

Wenn die Funktion F(V(z)) einen exponentiellen Zusammenhang aufweist, kann beispielsweise die Elektrodenfläche eine lineare Abhängigkeit von z aufweisen, d.h. die Elektroden können beispielsweise über ihre gesamte Erstreckung in z-Richtung eine konstante Breite besitzen.

Gemäß einer weiteren Ausführungsform ist der Parameter $P_I$ der Abstand D der Elektroden, wobei für den Abstand D gilt: $D(V(z)) = f_{P_1}(V(z)) \sim b_D^{-V(z)}$.

In diesem Fall können die Parameterfunktionen bezüglich der das Füllvolumen bestimmenden Behälterform F(V(z)) und/oder der Fläche der Elektrode A(V(z)) und/oder andere Parameterfunktionen z. B. einen linearen Zusammenhang aufweisen.

Eine exponentielle Abhängigkeit kann auch das Material der Elektroden aufweisen, indem sich die Materialeigenschaften, wie z. B. die Leitfähigkeit des Elektrodenmaterials, in Abhängigkeit von z exponentiell ändern.

Vorzugsweise weist das Messelement ein Trägerelement auf, wobei die beiden Elektroden auf gegenüberliegenden Seiten des Trägerelementes angeordnet sind. Das Trägerelement kann beispielsweise eine Trägerplatte sein. Die Elektroden werden bei der Herstellung des Messelementes bereits positioniert, wodurch der Einbau des Messelementes in den Flüssigkeitsbehälter vereinfacht wind. Eine Justierung der beiden Elektroden zur Einstellung einer vorgegebenen Größe der Messzelle entfällt.

Vorzugsweise ist das Messelement derart im Flüssigkeitsbehälter angeordnet, dass sich das breite zweite Elektrodenende oben befindet. Dadurch wird eine mit steigendem Füllvolumen ansteigende Messkurve realisiert.

Gemäß einer besonderen Ausführungsform kann das Messelement in die Wand des Flüssigkeitsbehälters integriert sein. In diesem Fall ist es bevorzugt, die beiden Elektroden beabstandet in der Wand des Flüssigkeitsbehälters anzuordnen, oder diese Elektroden gegenüberliegend anzubringen.

Gemäß einer besonderen Ausführungsform ist der Flüssigkeitsbehälter ein Einlauftrichter einer Wasserfiltereinrichtung. Bei derartigen Einlauftrichtern wird die Flüssigkeit in der Regel von oben zugeführt. Die Ablauföffnung befindet sich in der Bodenwand des Einlauftrichters, wo auch ein Filterelement, z. B. eine Filterkartusche, angeordnet ist. Die Ermittlung der Durchflussmenge kann gemäß einer besonderen Verwendung der Messvorrichtung zur Ermittlung des Zeitpunkts für den Austausch der Filterkartusche und insofern als Volumenbelastungsmessvorrichtung für Filterkartuschen verwendet werden.

Die Auswerteeinrichtung kann an einer Anzeigeeinheit angeschlossen sein. Diese Anzeigeeinheit kann bei Verwendung der Messvorrichtung als Volumenbelastungsmessvorrichtung für Filterkartuschen eine Anzeigeeinheit sein, die dem Benutzer den Austauschzeitpunkt für die Filterkartusche anzeigt.

Vorzugsweise sind mindestens die Spannungsquelle, die Auswerteeinrichtung und das mindestens eine Messelement in einer Baueinheit integriert. Gemäß einer weiteren Ausführungsform kann in die Baueinheit auch die Anzeigeeinheit integriert sein. Bei einer externen Spannungsquelle sind vorzugsweise die Auswerteeinrichtung und das mindestens eine Messelement in einer Baueinheit zusammengefasst. Diese Ausführungsformen ermöglichen eine einfache Handhabung und einen schnellen Austausch der Vorrichtung, weil die Vorrichtung als Einheit lediglich in den Behälter, in dem die Durchflussmengen gemessen werden sollen, eingesetzt werden muss.

Das erfindungsgemäße Messelement für die Bestimmung eines füllstandshöhenabhängigen Messwertes elektrisch leitender Flüssigkeiten mit mindestens einer lang gestreckten Elektrode sieht vor, dass die Fläche A der Elektrode mit zunehmendem Abstand z vom ersten Elektrodenende zum zweiten Elektrodenende exponentiell zunimmt. Es gilt $A(V(z)) \sim b_{A_1}^{V(z)}$, wobei $A(z) \sim \int_0^z B(z)dz$ mit B(z) Breite der Elektrode in Abhängigkeit von z. Daraus folgt, dass auch für B(z) ein exponentieller Zusammenhang gilt $A(V(z)) \sim A(z) \approx B(z) \cdot b_{A_2}{}^z$.

Für $b_{A_2}$ gilt vorzugsweise $0 < b_{A_2} \leq 5$ und $b_{A_2} \neq 1$, wobei ein bevorzugter Bereich für $b_{A_2}$ der Bereich zwischen 1 und 1,5 ($1 < b_{A_2} \leq 1,5$) ist.

Dies gilt jeweils für den Fall, dass z in cm gemessen wird. Für andere Einheiten für z ist die Basis $b_{A_2}$ entsprechend anzupassen.

Es wird eine kontinuierliche Verbreiterung der Elektrode bevorzugt. Gemäß einer weiteren Ausführungsform kann die Breite der Elektrode sich auch in Stufen ändern, wobei die Einhüllende der Stufen den beschriebenen exponentiellen Zusammenhang aufweist. Diese Ausgestaltung führt zu entsprechenden Sprüngen in der Messkurve, die bei entsprechender Auslegung der an das Messelement angeschlossenen Auswerteeinrichtung zur Bestimmung der absoluten Füllstandshöhen herangezogen werden können.

Die Breite $B_1$ am ersten Elektrodenende beträgt vorzugsweise 0,1 mm bis 20 mm. Die Breite $B_2$ am zweiten Elektrodenende liegt bei vorzugsweise 5 mm bis 30 mm.

Am ersten Elektrodenende ist ein sich senkrecht zur Elektrodenachse erstreckender balkenartiger Elektrodenabschnitt angeordnet. Diese balkenartige Verbreiterung dient dazu, einen definierten Anfangsmesswert zur Verfügung zu stellen.

An einem der beiden Elektrodenenden ist ein Kontaktelement vorgesehen. Hierbei wird das Kontaktelement vorzugsweise an dem oberen Elektrodenende angebracht, das aus der Flüssigkeit herausragt.

Die Elektroden können aus einem Metall, einer Metalllegierung, einem elektrisch leitenden Kunststoff oder einem sonstigen elektrisch leitenden Material bestehen.

Um die Handhabung der Elektrode zu erleichtern, ist mindestens eine Elektrode auf einem Trägerelement angeordnet.

Das Messelement kann auch in die Wand eines Flüssigkeitsbehälters integriert sein. In diesem Fall bildet die Wand des Flüssigkeitsbehälters das Trägerelement.

Wenn das Trägerelement ein eigenständiges Bauteil darstellt, ist die Gestalt einer Platte bevorzugt, auf deren beiden gegenüberliegenden Seiten jeweils eine Elektrode angeordnet sein kann. Das elektrische Feld zwischen beiden Elektroden verläuft um das Trägerelement herum.

Vorzugsweise sind beide Elektroden identisch ausgebildet.

Die Trägerplatte weist vorzugsweise einen Doppel-T-Querschnitt auf, was den Vorteil einer großen Stabilität hat und somit eine Beschädigung der Elektrode bei mechanischer Beanspruchung des Messelementes verhindert.

Die Trägerplatte weist vorzugsweise benachbart zum ersten Elektrodenende zwei Füße auf, die dazu dienen, einen definierten Abstand zum Boden des Flüssigkeitsbehälters herzustellen. Es wird dadurch ein elektrisches Anfangsfeld gebildet, das sich unter dem Messelement hindurch erstreckt. Bei niedrigen Flüssigkeitsständen im Behälter befindet sich das Anfangsfeld immer noch vollständig im Innern der Flüssigkeitssäule.

Es ist von Vorteil, wenn sowohl die Elektroden als auch die Trägerplatte aus Kunststoff bestehen. Hierfür wird für die Elektroden ein elektrisch leitender Kunststoff und für die Trägerplatte ein nicht leitender Kunststoff gewählt. Das Messelement kann auf diese Weise als Zweikomponentenspritzgussteil preiswert hergestellt werden.

Das Verfahren zur Bestimmung der Gesamtdurchflussmenge elektrisch leitender Flüssigkeiten mit der Leitfähigkeit LF durch einen Behälter bei sich in vertikaler Richtung (z-Richtung) verändernden Füllstandshöhen mittels eines Behälters und einer Leitfähigkeitsmessvorrichtung ist durch folgende Verfahrensschritte gekennzeichnet:

- Auslegung mindestens des Behälters und/oder der Leitfähigkeitsmessvorrichtung, dass er/sie durch mindestens eine von V(z) abhängige Parameterfunktion $f_{P_1}(V(z))$ mit $I = 1 \dots m$ beschreibbar ist/sind,

- Abstimmung der mindestens einen Parameterfunktion $f_{P_1}(V(z))$ derart, dass für die von der Leitfähigkeitsmessvorrichtung gelieferten Messwerte

$$M(V(z)) \doteq LF \cdot f_M(V(z)) \sim f(\, f_{P_i}\, (V(z))) \sim b_M{}^{V(z)} \text{ gilt,}$$

- Durchführung einer Messung zur Bestimmung der Basis $b_M$,

- Ermittlung von Messwerten $M_{t_i}(V(z))$ in zeitlichen Abständen $t_i - t_{i-1}$ mit $i = 1 \dots n$,

- Quotientenbildung $M_{t_{i+1}}/M_{t_i}$ und Logarithmieren des Quotienten zur Ermittlung von $dV_i$ und

- Addition der n-Werte $dV_i$ zur Bestimmung der gesamten Durchflussmenge dV.

Die Messung zur Bestimmung der Basis $b_M$ für das jeweilige System wird in der Regel einmalig mit vorgegebenen Flüssigkeitsmengen durchgeführt, und zwar bevor die Ermittlung der Messwerte beginnt. Der Wert der Basis $b_M$ wird somit einmal bestimmt und dann der Berechnung der Messwerte zugrunde gelegt. Der Wert $b_M$ geht beim Logarithmieren des Quotienten in die Ermittlung von $dV_i$ ein.

Vorzugsweise werden während des Betriebs der Einrichtung, in die die Messvorrichtung eingebaut ist, die Messwerte $M_{t_i}$ in zeitlichen Abständen von 1 bis 100 sec ermittelt. Welche zeitlichen Abstände zweckmäßig sind, ergibt sich unter anderem auch aus der Häufigkeit der Benutzung und aus der Druckflussgeschwindigkeit der jeweiligen Einrichtung. Wenn es sich bei der betreffenden Einrichtung um eine Wasserfiltereinrichtung handelt, hängt dies u. a. stark davon ab, wie viel gefiltertes Wasser vom Benutzer benötigt wird. Als bevorzugte zeitliche Abstände sind 1 bis 20 sec, insbesondere 2 bis 10 sec, vorgesehen.

Beispielhafte Ausführungsformen der Erfindung werden nachfolgend anhand der Zeichnungen näher erläutert. Es zeigen:

Figur 1        eine schematische Darstellung einer Messvorrich- tung gemäß einer ersten Ausführungsform,

Figur 2        die Draufsicht auf ein Messelement gemäß einer ersten Ausführungsform,

Figur 3        einen Horizontalschnitt durch das in Figur 2 gezeig- te Messelement längs der Linie III-III,

Figur 4        einen Vertikalschnitt durch das in Figur 2 gezeigte Messelement längs der Linie IV-IV,

Figur 5a, b    Draufsichten auf Messelemente gemäß zweier wei- terer Ausführungsformen,

Figur 6        einen Flüssigkeitsbehälter mit integrierter Elektrode,

Figur 7        eine schematische Darstellung einer Messvorrich- tung gemäß einer zweiten Ausführungsform,

Figur 8        einen vertikalen Schnitt durch eine Wasserfilterein- richtung mit Messvorrichtung,

Figur 9        eine schematische Darstellung des Messprinzips,

Figur 10       ein Diagramm, in dem der Messwert in Abhängig- keit vom Volumen für drei Flüssigkeiten mit unter- schiedlicher Leitfähigkeit aufgetragen ist,

Figuren 11a, b    zwei Seitenansichten eines Messelementes gemäß einer weiteren Ausführungsform,

Figuren 12a - c    zwei Seitenansichten und eine Draufsicht auf ein Messelement gemäß einer weiteren Ausführungs- form,

Figur 13       eine Seitenansicht eines Messelements gemäß ei- ner weiteren Ausführungsform und

Figur 14       eine Leitfähigkeitsmessvorrichtung als integrale Baueinheit.

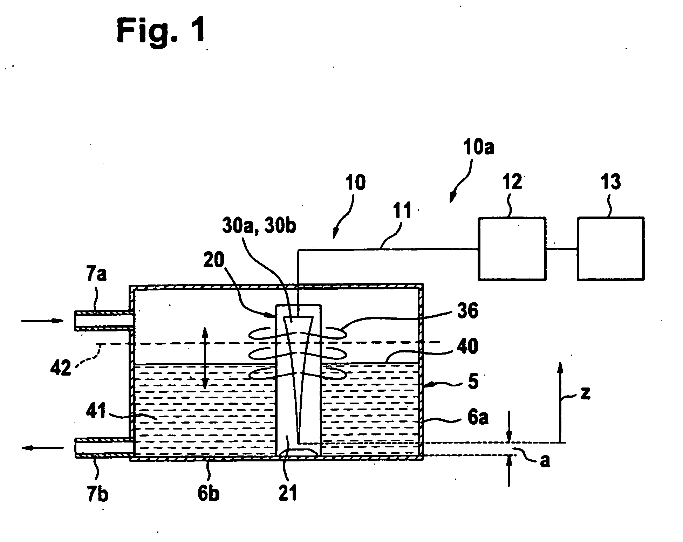

In der Figur 1 ist eine Messvorrichtung 10 gemäß einer ersten Ausführungsform schematisch dargestellt. Die Messvorrichtung 10 umfasst eine Leitfähigkeitsmessvorrichtung 10a, die ein Messelement 20 aufweist, das im Innern eines Flüssigkeitsbehälters 5 angeordnet ist. Der Flüssigkeitsbehälter 5 besitzt eine Umfangswand 6a und eine Bodenwand 6b, wobei im oberen Bereich der Umfangswand 6a ein Flüssigkeitszulauf 7a und im unteren Bereich ein Flüssigkeitsablauf 7b angeordnet ist. Sowohl die zugeführte als auch die abgeführte Flüssigkeitsmenge ändern sich im Laufe der Zeit, so dass sich der Flüssigkeitsspiegel 40 der Flüssigkeit 41 im Behälter 5 ebenfalls ständig ändert (s. Doppelpfeil). Zur Messung der durch den Behälter 5 fließenden Flüssigkeitsmenge ist die Messvorrichtung 10 vorgesehen.

Das Messelement 20 der Messvorrichtung 10 weist eine Trägerplatte 21 auf, die an Vorder- und Rückseite jeweils eine Elektrode 30a, 30b besitzt. Bei der Anordnung der Trägerplatte 21 mit den Elektroden 30a, 30b ist darauf zu achten, dass bei vollständiger Befüllung des Behälters weder die Elektroden vollständig noch die elektrischen Anschlüsse überhaupt eintauchen. Der maximal zulässige Flüssigkeitsspiegel ist mit 42 gekennzeichnet. In der Figur 1 ist lediglich die auf der Vorderseite angebrachte Elektrode 30a zu sehen. Die nicht dargestellte Elektrode 30b auf der Rückseite des Messelementes ist identisch ausgebildet. Es handelt sich hierbei um Elektroden 30a, 30b, deren Breite von unten nach oben zunimmt, wobei die Breite der Elektrode einer exponentiellen Funktion in Abhängigkeit des Abstandes z vom unteren oder ersten Elektrodenende 31 gehorcht. Der funktionale Zusammenhang zwischen A(V(z)) und z ist zunächst über $A(V(z)) \sim b_{A_1}{}^{V(z)}$ gegeben, was in einer exponentiellen Verbreiterung der Elektroden resultiert, nämlich $A(V(z)) \sim b_{A_2}{}^z$ oder Breite $B(z) - b_{A_2}{}^z$. Die z-Achse ist im rechten Teil der Figur 1 dargestellt, wobei der Nullpunkt der z-Achse am unteren Ende 31 der Elektroden 30a, 30b liegt. Der Abstand des unteren Endes der Elektrode 30a, 30b zur Bodenwand 6 ist mit a gekennzeichnet. Das Flüssigkeitsvolumen in diesem Bereich wird bei der Auswertung durch einen Festbetrag berücksichtigt.

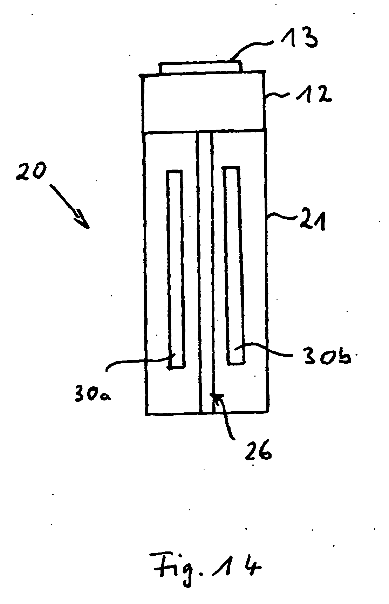

Die beiden Elektroden 30a, 30b sind über eine Verbindungsleitung 11 mit einer Auswerteeinrichtung 12 verbunden, die an eine Anzeigeeinheit 13 angeschlossen ist. Die Komponenten der Leitfähigkeitsmessvorrichtung sind zweckmäßigerweise alle in einer Baueinheit zusammengefasst, insbesondere in einem einzigen Gehäuse untergebracht bzw. angeordnet, wie dies beispielhaft in Figur 14 dargestellt ist. Der Behälter 5 kann damit auf einfache Weise bestückt werden. Die Leitfähigkeitsmessvorrichtung 10a wird lediglich in den Behälter eingesetzt, was die Montage erleichtert.

Mit der Messvorrichtung 10 wird eine Leitfähigkeitsmessung an der Flüssigkeit 41 durchgeführt, wobei die Messung und Auswertung kontinuierlich oder diskontinuierlich erfolgen kann. Die elektrischen Feldlinien zwischen den beiden Elektroden 30a und 30b sind durch das Bezugszeichen 36 angedeutet.

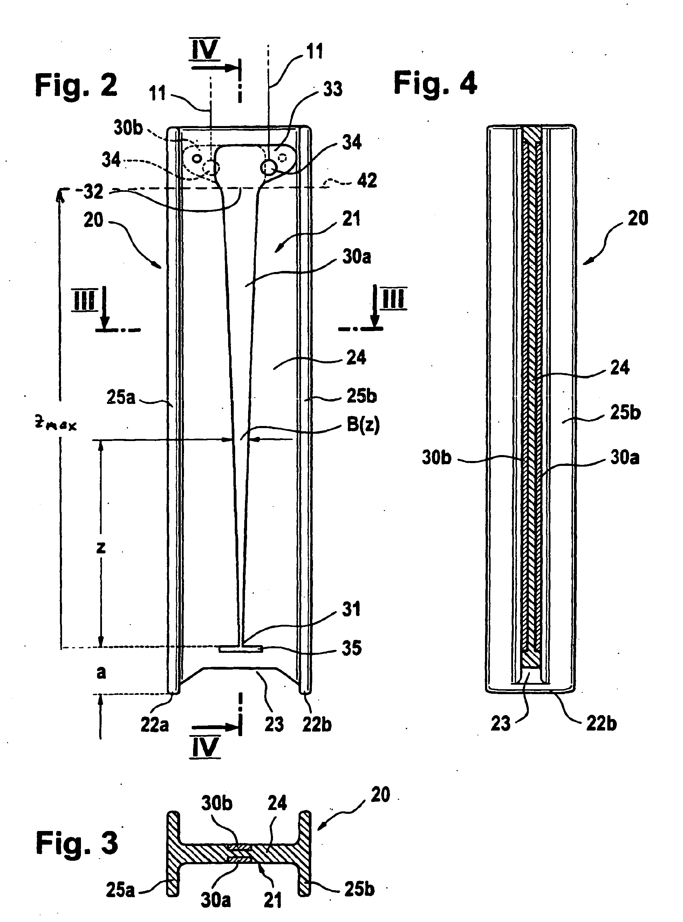

In der Figur 2 ist die Draufsicht auf das Messelement 20 vergrößert dargestellt. Das Messelement 20 besteht aus einer Trägerplatte 21 und zwei Messelektroden 30a, b. Die Trägerplatte 21 selbst besteht aus einer Mittelplatte 24 und zwei am Rand angeordneten T-Schenkeln 25a, b, wie dies in Figur 3 zu sehen ist. Dadurch erhält die Trägerplatte 21 im Querschnitt die Gestalt eines Doppel T. Am unteren Ende besitzt die Mittelplatte 24 eine Aussparung 23, wobei die T-Schenkel nach unten verlängert sind und Füße 22a, b bilden.

Auf den beiden Seiten der Mittelplatte 24 sind identische Elektroden 30a, b angeordnet, die bis auf eine Verbreiterung am oberen Ende symmetrisch sind. Jede Elektrode 30a, b besitzt ein schmales erstes Elektrodenende 31 und ein breites zweites Elektrodenende 32, wobei das erste Elektrodenende 31 unten angeordnet ist und das zweite Elektrodenende 32 den Bereich des maximal zulässigen Flüssigkeitsspiegels 42 bezeichnet. Hierbei zeigt die Figur 2 die Einbaulage im Flüssigkeitsbehälter 5 der Figur 1.

Die Breite B der Elektrode 30a nimmt mit zunehmendem Abstand z vom ersten Elektrodenende 31 zum zweiten Elektrodenende 32 kontinuierlich zu. $Z_{max}$ bezeichnet den Abstand vom unteren ersten Elektrodenende 31 zum oberen Elektrodenende 32. Für die Breite B gilt die Beziehung B(z) proportional $b_{A_2}{}^z$.

Am ersten Elektrodenende 31 weist die Elektrode 30a senkrecht zu ihrer Längsachse eine balkenartige Verbreiterung 35 auf. Diese balkenartige Verbreitung 35 dient dazu, die Größe des Start-Messwertes zu definieren. Dies gilt auch für die Elektrode 30b.

An das zweite Elektrodenende 32 schließt sich ein Kontaktelement 33 an, auf dem eine Kontaktpille 34 beispielsweise aus Silikon mit Graphit aufgebracht ist. Das Kontaktelement 33 ist an die Größe der Kontaktpille 34 angepasst und erstreckt sich seitlich über die Elektrode hinaus. Die Kontaktpille 34 dient als Anschlusselement für die elektrische Verbindungsleitung 11, die zur Auswerteeinrichtung 12 führt, wie dies in der Figur 1 dargestellt ist.

In der Figur 3 ist ein Schnitt längs der Linie III-III durch das in Figur 2 gezeigte Messelement 20 dargestellt. Es ist zu sehen, dass auf beiden Seiten der Mittelplatte 24 Elektroden 30a, b angeordnet sind.

In der Figur 4 ist ein Vertikalschnitt längs der Linie IV-IV durch das in Figur 2 gezeigte Messelement dargestellt. Die Trägerplatte 21 besteht aus nicht leitendem Kunststoff, während die Elektroden 30a, b aus leitendem Kunststoff hergestellt sind. Es ist dadurch möglich, das Messelement 20 als Zweikomponentenspritzgussteil herzustellen.

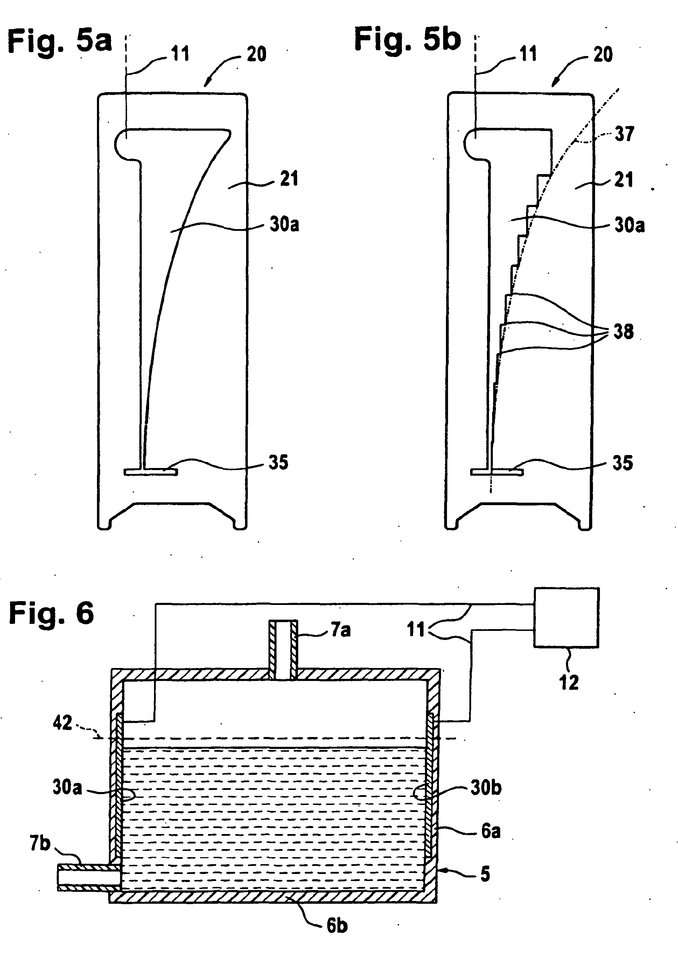

In der Figur 5a ist eine weitere Ausführungsform des Messelementes 20 dargestellt, die sich von der Ausführungsform gemäß Figur 2 dadurch unterscheidet, dass die Elektroden 30a, 30b (30b auf der Rückseite, daher nicht sichtbar) asymmetrisch ausgeführt sind und eine gerade und eine exponentielle, d. h. gekrümmte Begrenzungslinie aufweisen.

In der Figur 5b ist eine weitere Modifikation zu sehen, die eine gestufte Elektrode 30a zeigt. Die Einhüllende 37 der einzelnen Stufen 38 entspricht der rechten Begrenzungslinie der Elektrode 30a in Figur 5a und zeigt ebenfalls einen exponentiellen Verlauf.

In der Figur 6 ist eine weitere Ausführungsform der Messvorrichtung 10 dargestellt, die sich von der in Figur 1 dadurch unterscheidet, dass die Elektroden 30a, 30b in der Wand 6a des Flüssigkeitsbehälters 5 gegenüberliegend angeordnet sind und dass der Flüssigkeitszulauf 7a nicht in der Umfangswand sondern in der Deckwand angeordnet ist. Die Umfangswand 6a übernimmt bei dieser Ausführungsform die Funktion der Trägerplatte 21 gemäß den zuvor beschriebenen Ausführungsformen. Der maximal zulässige Flüssigkeitsspiegel 42 ist derart gewählt, dass das Kontaktelement 33 der Elektroden mit den Anschlüssen nicht eintaucht.

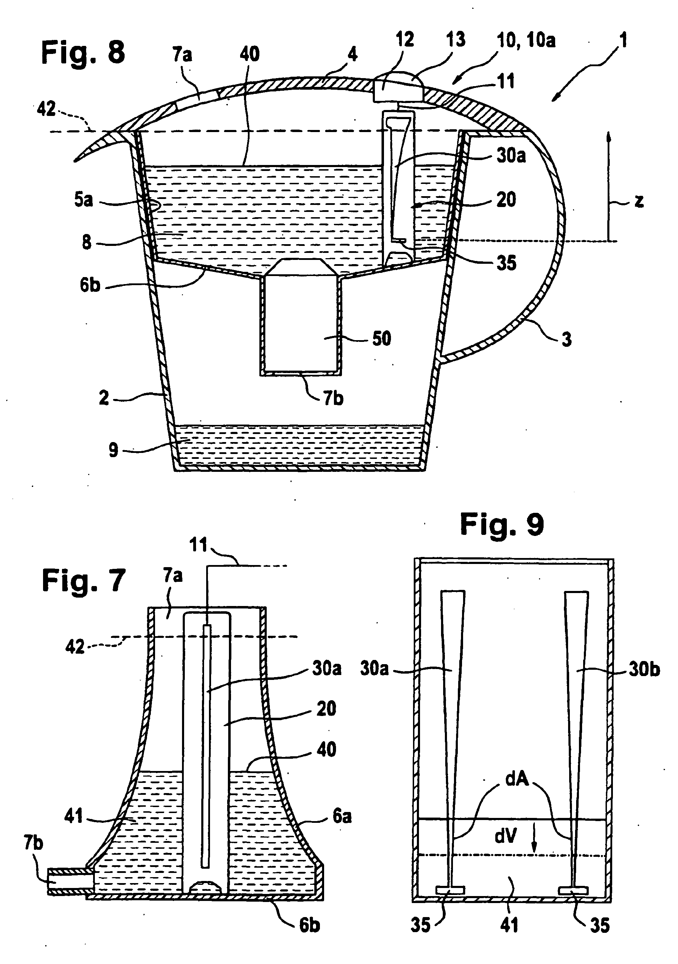

In der Figur 7 ist eine weitere Ausführungsform der Messvorrichtung 10 dargestellt. Während gemäß der Ausführungsform der Figur 1 der Flüssigkeitsbehälter 5 eine quaderförmige Gestalt aufweist, so dass die Funktion F(V (z)) einer Geraden gehorcht, verjüngt sich der Flüssigkeitsbehälter 5 gemäß der Figur 7 nach oben. Die Seitenwand 6a ist exponentiell gekrümmt, so dass die Funktion F(z), die den Querschnitt des Flüssigkeitsbehälters 5 beschreibt, einer Exponentialfunktion gehorcht. Es gilt $F(V(z)) \sim F(z) \sim b_F{}^{-z}$. In diesem Fall kann das Messelement 20 mit Elektroden 30a, 30b ausgestattet sein, die in z-Richtung eine konstante Breite aufweisen.

In der Figur 8 ist eine Wasserfiltereinrichtung 1 im Vertikalschnitt dargestellt, die eine Kanne 2 mit Griff 3 und Deckel 4 sowie einen in der Kanne 2 befindlichen Einlauftrichter 5a aufweist. Im Auslauf 7b des Einlauftrichters 5a ist eine Filterkartusche 50 eingesetzt. Das Rohwasser 8 wird nach Abnahme des Deckels 4 oder durch die Einlauföffnung 7a im Deckel 4 in den Einlauftrichter 5a eingefüllt und strömt von dort durch die Filterkartusche 50 in die Kanne 2, an deren Boden sich das filtrierte Wasser 9 sammelt.

Im Einlauftrichter 5a ist die Leitfähigkeitsmessvorrichtung 10a angeordnet, die ein Messelement 20 aufweist, das über eine elektrische Leitung 11 mit einer Auswerteeinrichtung 12 verbunden ist. Die Auswerteeinrichtung 12 beinhaltet auch die Stromversorgungseinheit. An der Auswerteeinrichtung 12 ist eine Anzeigeeinheit 13 angebracht, die im Deckel 4 angeordnet und von außen sichtbar sind. Die Leitfähigkeitsmessvorrichtung 10a kann auch als Baueinheit ausgeführt sein, wie dies in Figur 14 dargestellt ist. Diese Baueinheit kann beispielsweise in den Deckel oder in den Behälter eingesetzt werden.

Wenn Rohwasser 8 zuläuft, steigt der Flüssigkeitsspiegel 40 an. Während der Filtration sinkt der Flüssigkeitsspiegel 40 ab.

Aus den Füllstandsunterschieden kann auf das Flüssigkeitsvolumen geschlossen werden, das durch die Filterkartusche 50 geflossen ist. Dieses Volumen ist ein Maß für den Austauschzeitpunkt der Filterkartusche 50.

Die Änderungen des Flüssigkeitsspiegels 40 werden von dem Messelement 20 erfasst. Die Auswerteeinrichtung 12 errechnet aus den Messwerten das dazugehörige Volumen unter Berücksichtigung der Abmessungen des Einlauftrichters 5a. Wenn ein für die betreffende Filterkartusche 50 vorgegebener Volumenwert überschritten wird, wird dies über die Anzeigeeinheit 13 dem Benutzer mitgeteilt. Die Messvorrichtung 10 wird bei dieser Ausführungsform als Volumenbelastungsmessvorrichtung für die Filterkartusche 50 eingesetzt.

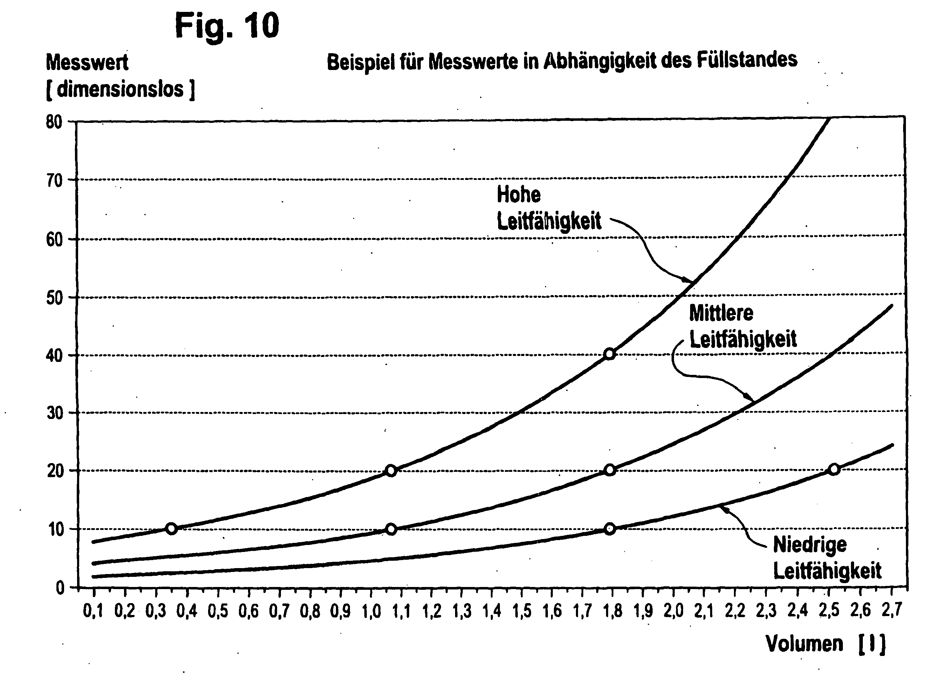

In der Figur 9 ist eine Prinzipdarstellung der Anordnung der Elektroden 30a, b dargestellt. dV bezeichnet die Volumenänderung der Flüssigkeit bei Änderung des Flüssigkeitsspiegels 40. Mittels dieser Messvorrichtung 10 wurden für drei Flüssigkeiten mit unterschiedlicher Leitfähigkeit Messungen durchgeführt. Das Ergebnis ist in dem Diagramm der Figur 10 dargestellt.

Die Messwerte $M_{t_i}$ werden in vorgegebenen Zeitabständen $\Delta t = t_i - t_{i-1}$ ermittelt.

Es gilt:

$$M(V(z)) = K(LF) \cdot f_M(V(z)) = K(LF) \cdot b_M{}^{V(z)}$$

und somit für zwei nacheinander ermittelte Messwerte

$$M_1(V) = K(LF) \cdot b_M{}^{V_1}; \; M_2(V) = K(LF) \cdot b_M^{V_2}$$

Für das Verhältnis der beiden Messwerte gilt:

$$\frac{M_2}{M_1} = \frac{K(LF) \cdot b_M{}^{V_2}}{K(LF) \cdot b_M{}^{V_1}} = \frac{b_M{}^{V_2}}{b_M{}^{V_1}} = b_M{}^{(V_2 - V_1)}$$

Hierbei sind:

$M_1$ = Messwert bei $V_1$, d. h. Zeitpunkt $t_1$
$M_2$ = Messwert bei $V_2$, d. h. Zeitpunkt $t_2$
$V_1$ = absolutes Volumen vor einer Volumenänderung
$V_2$ = absolutes Volumen nach einer Volumenänderung
$dV = V_1 - V_2$ (Differenzvolumen)
$K$ = Proportionalitätsfaktor, der u. a. von LF abhängt. Andere Einflussgrößen auf den Faktor K sind Zellenkonstante, Volumenkonstante, Proportionalitätsfaktor des Messverstärkers
$b_M$ = Basiszahl der Exponentialfunktion, wird festgelegt durch die Geometrie der Leitfähigkeitsmesszelle und Abmessungen des Behälters (Volumenänderung/Messwertänderung)

Durch Logarithmieren ergibt sich der Zusammenhang:

$$dV = \text{Log}_{b_M}\left(\frac{M_2}{M_1}\right)$$

An den Formeln ist zu erkennen, dass sich der Faktor K herauskürzt. Die Basis $b_M$ muss für die jeweilige Messanordnung durch eine einmalige Kalibrierung bestimmt werden und geht als konstante Basiszahl in die Messung ein. Somit ist die Bestimmung des Differenzvolumens eindeutig.

Für das Beispiel nach Figur 10 ergeben sich für die Messwerte $M_2 = 10$ und $M_1 = 20$ (Basis $b_M = 2,5937$) folgende Berechnungen (Volumenangaben in Liter, z in cm):

A) niedrige Leitfähigkeit: $K = 1,8181$; $M_1 = 20$; $V_1 = 2,516$; $M_2 = 10$; $V_2 = 1,789$ **dV = 0,727**
B) mittlere Leitfähigkeit: $K = 3.6363$; $M_1 = 20$; $V_1 = 1,789$; $M_2 = 10$; $V_2 = 1,061$ **dV = 0,727**
C) hohe Leitfähigkeit: $K = 7,7272$; $M_1 = 20$; $V_1 = 1,061$; $M_2 = 10$; $V_2 = 0,334$ **dV = 0,727**

Unabhängig von K und somit von der Leitfähigkeit LF der Flüssigkeit wird immer dieselbe Volumenänderung gemessen.

Für die Bestimmungen eines Differenzvolumens ist das exponentielle Messprinzip sehr gut geeignet. Der Vorteil ist, dass Faktoren wie z. B. die absolute Leitfähigkeit der Flüssigkeit die Messwertbestimmung nicht beeinflussen und dass nur zwei Messungen für ein Differenzvolumen notwendig sind.

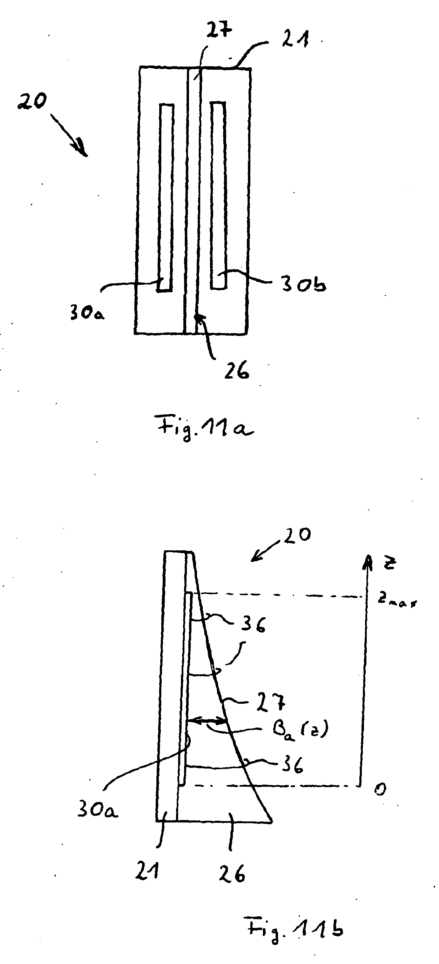

In Figuren 11 a und 11 b sind zwei Seitenansichten eines Messelementes 20 gemäß einer weiteren Ausführungsform dargestellt. Die beiden streifenförmigen Elektroden 30a, 30b, die eine konstante Breite besitzen, sind auf einer Trägerplatte 21 nebeneinander angeordnet. Zwischen den beiden Elektroden 30a, 30b ist ein Hindernis in Form einer Platte 26 angeordnet, das aus elektrisch nicht leitendem Material besteht und das die Weglänge der elektrischen Feldlinien 36 mit zunehmenden z verkürzt. Durch das Hindernis wird der selbe Effekt erzielt wie bei einem entsprechend sich verändernden Abstand gegenüberliegender Elektroden. Die Platte 26 besitzt eine von unten nach oben abnehmende Breite $B_a(z)$ mit der Folge, dass die Weglänge der Feldlinien 36 zu den beiden Elektroden 30a, 30b von unten nach oben abnimmt. Obwohl die beiden Elektroden räumlich benachbart auf der Trägerplatte 21 angeordnet sind, wird durch die Platte ein sich für die Wegstrecke der elektrischen Feldlinien exponentiell abnehmender Abstand D der beiden Elektroden 30a, 30b von unten nach oben erzeugt.

Der funktionale Zusammenhang zwischen dem Abstand $B_a$ und V(z) ist über $B_a(V(z)) \sim b_{a_1}^{-V(z)} \sim b_{a_1}^{-z}$ gegeben, was schließlich zur exponentiell gekrümmten Vorderkante 27 der Platte 26 führt.

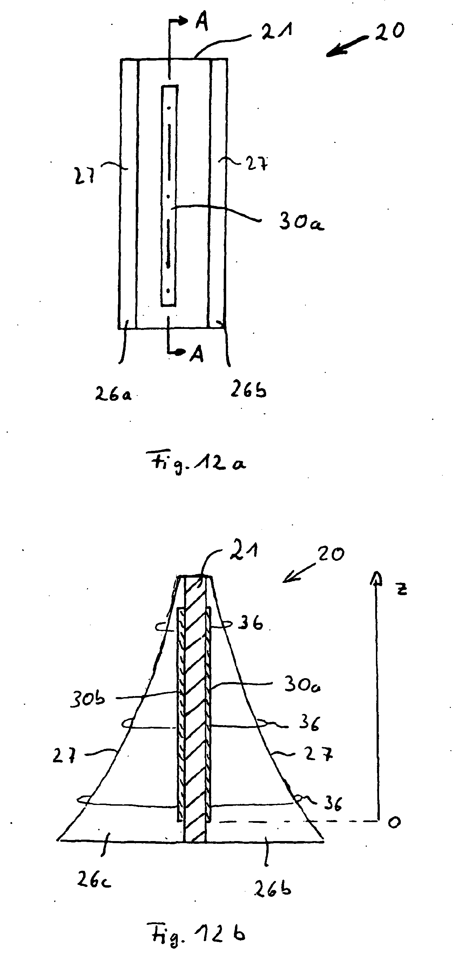

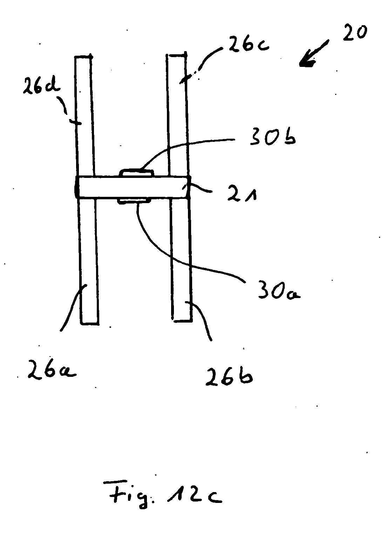

In den Figuren 12a bis c ist eine Modifikation dieser Ausführungsform dargestellt, wobei die Figur 12b den Schnitt längs der Linie A-A in Figur 12a zeigt. Die beiden Elektroden 30a, 30b sind auf gegenüberliegenden Seiten der Trägerplatte 21 angeordnet. Um die Wegstrecke für die Feldlinien 36 mit zunehmendem z zu verkürzen, sind beidseitig der Elektroden 30a, 30b Platten 26a, b, c und d angeordnet. Der funktionale Zusammenhang zwischen dem für die Feldlinien relevanten Abstand der beiden Elektroden 30a, 30b ist analog zu dem funktionalen Zusammenhang, der im Zusammenhang mit den Figuren 11a und 11b beschrieben wird.

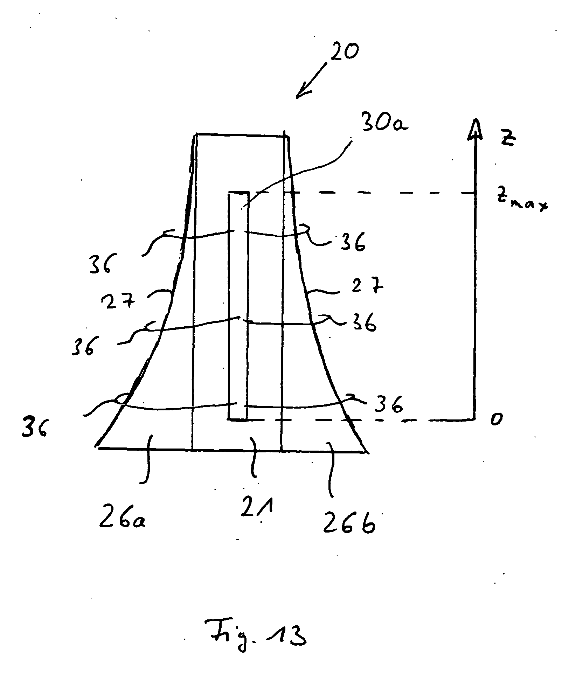

In der Figur 13 ist eine weitere Ausführungsform dargestellt, bei der die beiden Elektroden 30a, b auf gegenüberliegenden Seiten der Trägerplatte 21 angeordnet sind. Die beiden Platten 26a, b, die den Weg der elektrischen Feldlinie 36 mit zunehmendem z verkürzen, sind in der Ebene des Trägerelements 21 angeordnet und können auch Bestandteil der Trägerplatte 21 sein:

Die Figur 14 zeigt die Ausführungsform des Messelements gemäß Figur 11a mit integrierter Auswerteeinrichtung 12 und Messeinrichtung 13, die auch die Stromquelle umfasst. Die Baueinheit wird in einem Behälter eingesetzt und dort befestigt.

**Bezugszeichenliste**

1 Wasserfiltereinrichtung
2 Kanne

| | |
|---|---|
| 3 | Griff |
| 4 | Deckel |
| 5 | Flüssigkeitsbehälter |
| 5a | Einlauftrichter |
| 6a | Umfangswand |
| 6b | Bodenwand |
| 7a | Einlauf |
| 7b | Auslauf |
| 8 | Rohwasser |
| 9 | filtriertes Wasser |

| | |
|---|---|
| 10 | Messvorrichtung |
| 10a | Leitfähigkeitsmessvorrichtung |
| 11 | elektrische Verbindungsleitung |
| 12 | Auswerteeinrichtung |
| 13 | Anzeigeeinheit |

| | |
|---|---|
| 20 | Messelement |
| 21 | Trägerplatte |
| 22a, b | Fuß |
| 23 | Aussparung |
| 24 | Mittelplatte |
| 25a, b | T-Schenkel |
| 26 | Platte |
| 26a, b, c, d | Platte |
| 27 | Vorderkante |

| | |
|---|---|
| 30a, b | Messelektrode |
| 31 | erstes Elektrodenende |
| 32 | zweites Elektrodenende |
| 33 | Kontaktelement |
| 34 | Kontaktpille |
| 35 | balkenartige Verbreiterung |
| 36 | elektrische Feldlinien |
| 37 | Einhüllende |
| 38 | Stufe |

| | |
|---|---|
| 40 | Flüssigkeitsspiegel |
| 41 | Flüssigkeit |
| 42 | maximaler Flüssigkeitsspiegel |

| | |
|---|---|
| 50 | Filterkartusche |

**Patentansprüche**

1. Messvorrichtung (10) zur Bestimmung von Durchflussmengen dV(z) elektrisch leitender Flüssigkeiten mit der Leitfähigkeit LF durch einen Behälter (5) bei sich in vertikaler Richtung (z-Richtung) verändernden Füllstandshöhen mit

• einem eine Bodenwand (6b) und Zu- und Ablauf (7a, b) aufweisenden Behälter (5) und mit
• einer Leitfähigkeitsmessvorrichtung (10a), die folgende Komponenten umfasst:

■ eine Spannungsquelle
■ eine Auswerteeinrichtung (12) und
■ mindestens ein Messelement (20),

• das im Behälter (5) angeordnet ist und an die Auswerteeinrichtung (12) angeschlossen ist und
• das mindestens zwei sich in z-Richtung erstreckende Elektroden (30a, b) aufweist, die senkrecht zur z-Richtung beabstandet zueinander angeordnet sind, wobei $z_{max}$ die Entfernung vom unteren ersten Elektrodenende (31) (z = 0) zum oberen zweiten Elektrodenende (32) bezeichnet, **dadurch gekennzeichnet,**

**dass** die Leitfähigkeitsmessvorrichtung (10a) in zeitlichen Abständen $t_i - t_{i-1}$ mit i = 1 ... n Messwerte $M_{t_i}$ (V) = M (V(z)) ~ LF · $f_M$(V(z)) liefert,

**dass** mindestens der Behälter (5) und/oder die Leitfähigkeitsmessvorrichtung (10a) derart ausgelegt ist/sind, dass er/sie durch mindestens eine von V(z) abhängige Parameterfunktion $f_{P_1}$ (V(z)) mit I = 1... m beschreibbar ist/sind, so dass gilt:

$$f_M(V(z)) \sim f ( f_{P_I} (V(z)\ \text{mit}\ I = 1\ldots m)) \sim b_M{}^{V(z)}$$

wobei $b_M$ eine Zahl $\neq 0$ und $\neq 1$ ist,
und **dass** die Auswerteeinrichtung (12) mindestens zur Quotientenbildung der Messwerte und zum Logarithmieren der Quotienten ausgebildet ist.

2. Vorrichtung nach Anspruch 1, **dadurch gekennzeichnet, dass** für mindestens eine Parameterfunktion gilt:

$f_{P_1}$ (V(z)) $\sim b_{P_1}{}^{V(z)}$ vorzugsweise mit $0 < b_{P_1} \leq 5$ und $b_{P_1} \neq 1$ und z in cm.

3. Vorrichtung nach Anspruch 2, **dadurch gekennzeichnet, dass** mindestens ein Parameter $P_I$ derart ausgewählt ist, dass $f_{P_1}$ (V(z)) $\sim b_{P_1}{}^{V(z)}$ vorzugsweise mit $1 < b_{P_1} \leq 1{,}5$ und z in cm ist.

4. Vorrichtung nach einem der Ansprüche 1 bis 3, **dadurch gekennzeichnet, dass** der Parameter $P_I$ die Fläche A mindestens einer Elektrode (30a, b) ist und dass für die Fläche A gilt: A(V(z)) = $f_{P_1}$ (V(Z)) $\sim b_{A_1}{}^{V(z)}$.

5. Messvorrichtung nach einem der Ansprüche 1 bis 4, **dadurch gekennzeichnet, dass** der Parameter $P_I$ die das Füllvolumen bestimmende Behälterform F ist und dass für die Behälterform gilt: F(V(z)) = $f_{P_1}$ (V(z)) $\sim b_F{}^{V(z)}$.

6. Vorrichtung nach einem der Ansprüche 1 bis 5, **dadurch gekennzeichnet, dass** der Parameter $P_I$ der Abstand D der Elektroden (30a, b) ist und dass für den Abstand D gilt:

$$D(V(z)) = f_{P_I} (V(z)) \sim b_D{}^{-V(z)}.$$

7. Vorrichtung nach einem der Ansprüche 1 bis 6, **dadurch gekennzeichnet, dass** das Messelement (20) ein Trägerelement (21) aufweist und dass die beiden Elektroden (30a, b) auf gegenüberliegenden Seiten des Trägerelements (21) angeordnet sind.

8. Vorrichtung nach einem der Ansprüche 1 bis 7, **dadurch gekennzeichnet, dass** das Messelement (20) derart im Flüssigkeitsbehälter (5) angeordnet ist, dass sich das breite zweite Elektrodenende (32) oben befindet.

9. Messvorrichtung nach einem der Ansprüche 1 bis 8, **dadurch gekennzeichnet, dass** das Messelement (20) in die Wand (6a) des Flüssigkeitsbehälters (5) integriert ist.

10. Messvorrichtung nach einem der Ansprüche 1 bis 9, **dadurch gekennzeichnet, dass** der Flüssigkeitsbehälter (5) ein Einlauftrichter (5a) einer Wasserfiltereinrichtung (1) ist.

11. Vorrichtung nach einem der Ansprüche 1 bis 10, **dadurch gekennzeichnet, dass** die Auswerteeinrichtung (12) an eine Anzeigeeinheit (13) angeschlossen ist.

**12.** Vorrichtung nach einem der Ansprüche 1 bis 11, **dadurch gekennzeichnet, dass** mindestens die Spannungsquelle, die Auswerteeinrichtung (12) und das mindestens eine Messelement (20) in einer Baueinheit integriert sind.

**13.** Vorrichtung nach Anspruch 12, **dadurch gekennzeichnet, dass** in die Baueinheit die Anzeigeeinheit (13) integriert ist.

**14.** Vorrichtung nach einem der Ansprüche 1 bis 13, **dadurch gekennzeichnet, dass** zwischen den beiden Elektroden (30a, 30b) mindestens ein Element angeordnet ist, das die Wegstrecke der zwischen den beiden Elektroden (30a, 30b) sich ausbildenden elektrischen Feldlinien (36) verändert.

**15.** Vorrichtung nach Anspruch 14, **dadurch gekennzeichnet, dass** das Element eine Gestalt aufweist, so dass die Wegstrecke der elektrischen Feldlinien (36) mit zunehmendem Wert z exponentiell abnimmt.

**16.** Vorrichtung nach einem der Ansprüche 14 oder 15, **dadurch gekennzeichnet, dass** das Element eine Platte (26, 26a-d) ist, deren freie Vorderkante (27) einen gekrümmten Verlauf aufweist.

**17.** Vorrichtung nach einem der Ansprüche 14 bis 16, **dadurch gekennzeichnet, dass** die beiden Elektroden (30a, 30b) nebeneinander auf einem Trägerelement (21) angeordnet sind, und dass die Platte (26, 26a-d) zwischen den beiden Elektroden (30a, b) angeordnet ist.

**18.** Vorrichtung nach einem der Ansprüche 14 bis 16, **dadurch gekennzeichnet, dass** die beiden Elektroden (30a, b) auf gegenüberliegenden Seiten auf einem Trägerelement (21) angeordnet sind und dass seitlich benachbart zu jeder Elektrode (30a, b) jeweils eine Platte (26, 26a-d) angeordnet ist.

**19.** Vorrichtung nach Anspruch 17 oder 18, **dadurch gekennzeichnet, dass** die Platte (26, 26a-d) senkrecht zum Trägerelement (21) angeordnet ist.

**20.** Verwendung der Vorrichtung (10) nach einem der Ansprüche 1 bis 19 als Volumenbelastungsmessvorrichtung für Filterkartuschen (50).

**21.** Verwendung nach Anspruch 20, **dadurch gekennzeichnet, dass** die Messvorrichtung (10) eine Anzeigeeinheit (13) aufweist, die den Austauschzeitpunkt für die Filterkartusche (50) anzeigt.

**22.** Messelement für die Bestimmung eines füllstandshöhenabhängigen Messwertes elektrisch leitender Flüssigkeiten mit mindestens einer lang gestreckten Elektrode (30a, b), **dadurch gekennzeichnet, dass** die Fläche A der Elektrode (30a, b) mit zunehmendem Abstand z vom ersten Elektrodenende (31) zum zweiten Elektrodenende (32) exponentiell zunimmt.

**23.** Messelement nach Anspruch 22, **dadurch gekennzeichnet, dass** für die Fläche A der Elektrode (30a, b) gilt: $A(V(z)) \sim b_{A_2}{}^z$ mit $0 < b_{A_2} \leq 5$ und $b_{A_2} \neq 1$ und z in cm.

**24.** Messelement nach Anspruch 22 oder 23, **dadurch gekennzeichnet, dass** für die Fläche A der Elektrode (30a, b) gilt: $A(V(z)) \sim b_{A_2}{}^z$ mit $1 < b_{A_2} \leq 1,5$ und z in cm.

**25.** Messelement nach einem der Ansprüche 22 bis 24, **dadurch gekennzeichnet, dass** die Breite B der Elektrode (30a, b) sich in Stufen (38) ändert.

**26.** Messelement nach einem der Ansprüche 22 bis 25, **dadurch gekennzeichnet, dass** die Breite B1 am ersten Elektrodenende (31) 0,1 mm bis 20 mm beträgt.

**27.** Messelement nach einem der Ansprüche 22 bis 26, **dadurch gekennzeichnet, dass** die Breite B2 am zweiten Elektrodenende (32) 5 mm bis 30 mm beträgt.

**28.** Messelement nach einem der Ansprüche 22 bis 27, **dadurch gekennzeichnet, dass** am ersten Elektrodenende (31) eine sich senkrecht zur Elektrodenachse erstreckende balkenartige Verbreiterung (35) vorgesehen ist.

**29.** Messelement nach einem der Ansprüche 22 bis 28, **dadurch gekennzeichnet, dass** sich an einem Elektrodenende (31, 32) ein Kontaktelement (33) anschließt.

**30.** Messelement nach einem der Ansprüche 22 bis 29, **dadurch gekennzeichnet, dass** die Elektroden (30a, b) aus einem Metall, einer Metalllegierung, einem elektrisch leitenden Kunststoff oder einem sonstigen leitenden Material bestehen.

**31.** Messelement nach einem der Ansprüche 22 bis 30, **dadurch gekennzeichnet, dass** mindestens eine Elektrode (30a, b) auf einem Trägerelement (21) angeordnet ist.

**32.** Messelement nach Anspruch 31, **dadurch gekennzeichnet, dass** das Trägerelement die Wand (6a) eines Flüssigkeitsbehälters (5) ist.

**33.** Messelement nach Anspruch 31, **dadurch gekennzeichnet, dass** das Trägerelement eine Trägerplatte (21) ist, auf deren beiden gegenüberliegenden Seiten jeweils eine Elektrode (30a, b) angeordnet ist.

**34.** Messelement nach einem der Ansprüche 31 bis 33, **dadurch gekennzeichnet, dass** beide Elektroden (30a, b) identisch sind.

**35.** Messelement nach einem der Ansprüche 33 oder 34, **dadurch gekennzeichnet, dass** die Trägerplatte (21) einen Doppel-T-Querschnitt aufweist.

**36.** Messelement nach einem der Ansprüche 31 bis 35, **dadurch gekennzeichnet, dass** die Trägerplatte (21) benachbart zum ersten Elektrodenende (31) zwei Füße (22a, b) aufweist.

**37.** Messelement nach einem der Ansprüche 22 bis 36, **dadurch gekennzeichnet, dass** die Elektroden (30a, b) aus einem elektrisch leitenden Kunststoff und die Trägerplatte (21) aus einem nicht leitenden Kunststoff bestehen.

**38.** Messelement nach einem der Ansprüche 22 bis 37, **dadurch gekennzeichnet, dass** es ein Zweikomponenten-Spritzgussteil ist.

**39.** Verfahren zur Bestimmung der Gesamtdurchflussmenge dV elektrisch leitender Flüssigkeiten der Leitfähigkeit LF durch einen Behälter bei sich in vertikaler Richtung (z-Richtung) verändernden Füllstandshöhen mittels eines Behälters und einer Leitfähigkeitsmessvorrichtung **gekennzeichnet durch** folgende Schritte:

- Auslegung mindestens des Behälters und/oder der Leitfähigkeitsmessvorrichtung, dass er/sie **durch** mindestens eine von V(z) abhängige Parameterfunktion $f_{P_1}$ (V(z)) mit I = 1... m beschreibbar ist/sind,
- Abstimmung der mindestens einen Parameterfunktion $f_{P_1}$ (V(z)) derart, dass für die von der Leitfähigkeitsmessvorrichtung gelieferten Messwerte

$$M(V(z)) \sim LF \cdot f_M(V(z)) \sim f(\,f_{P_i}\,(V(z))) \sim b_M{}^{V(z)} \text{ gilt,}$$

- Durchführung einer Messung zur Bestimmung der Basis $b_M$,
- Ermittlung von Messwerten $M_{t_i}$ (V(z)) in zeitlichen Abständen $t_i - t_{i-1}$ mit i = 1 ... n,
- Quotientenbildung $M_{t_{i+1}}$, /$M_{t_i}$ und Logarithmieren des Quotienten zur Ermittlung von $dV_i$ und
- Addition der n-Werte $dV_i$ zur Bestimmung der gesamten Durchflussmenge dV.

**40.** Verfahren nach Anspruch 39, **dadurch gekennzeichnet, dass** die Messwerte $M_{t_i}$ im zeitlichen Abstand von 1 bis 100 sec ermittelt werden.

**41.** Verfahren nach Anspruch 39 oder 40, **dadurch gekennzeichnet, dass** die Messwerte $M_{t_i}$ in zeitlichen Abständen von 1 bis 20 sec, vorzugsweise von 2 bis 10 sec, ermittelt werden.

**Claims**

**1.** Measurement device (10) for establishing flow rates dV(z) of electrically conductive fluids having conductivity LF through a container (5) with filling levels which are variable in a vertical direction (z direction), having

> • a container (5) which has a bottom wall (6b) and an inlet and outlet (7a, b) and having
> • a conductivity measurement device (10a) which comprises the following components:
>
>> • a voltage source,
>> • an evaluation device (12) and
>> • at least one measurement element (20)
>>
>>> • which is arranged in the container (5) and which is connected to the evaluation device (12) and
>>> • which has at least two electrodes (30a, b) which extend in the z direction and which are arranged with spacing from each other perpendicularly relative to the z direction, with $z_{max}$ denoting the distance from the lower first electrode end (31) (z = 0) to the upper second electrode end (32), **characterised in that**

the conductivity measurement device (10a) provides measurement values $M_{t_i}(V) = M(V(z)) \sim LF \cdot f_M(V(z))$ at time intervals $t_i - t_{i-1}$, with i = 1 ...n,
**in that** at least the container (5) and/or the conductivity measurement device (10a) is/are configured in such a manner that it/they is/are able to be described by at least one parameter function $f_{P_1}(V(z))$ which is dependent on V(z), with 1 = 1 ...m,
so that the following applies:

$$f_M(V(z)) \sim f(f_{P_I}(V(z), \text{ with } l = 1 \text{ ...m})) \sim b_M^{V(z)},$$

with $b_M$ being a number $\neq 0$ and $\neq 1$,
and **in that** the evaluation device (12) is constructed at least to form a quotient of the measurement values and to logarithmise the quotients.

2. Device according to claim 1, **characterised in that** the following applies to at least one parameter function:

$$f_{P_I}(V(z)) \sim b_{P_I}^{V(z)},$$ preferably with $0 < b_{P_1} \leq 5$ and $b_{P_1} \neq 1$ and z being in cm.

3. Device according to claim 2, **characterised in that** at least one parameter $P_I$ is selected in such a manner that

$$f_{P_I}(V(z)) \sim b_{P_I}^{V(z)},$$ preferably with $1 < b_{P_1} \leq 1.5$ and z being in cm.

4. Device according to any one of claims 1 to 3, **characterised in that** the parameter $P_I$ is the surface-area A of at least one electrode (30a, b) and **in that** the following applies to the surface-area A:

$$A(V(z)) = f_{P_I}(V(z)) \sim b_{A_I}^{V(z)}.$$

5. Measurement device according to any one of claims 1 to 4, **characterised in that** the parameter $P_I$ is the container shape F which determines the filling volume and **in that** the following applies to the container shape: $F(V(z)) = f_{P_1}(V(z)) \sim b_F^{V(z)}$.

6. Device according to any one of claims 1 to 5, **characterised in that** the parameter $P_I$ is the distance D between the electrodes (30a, b) and **in that** the following applies to the distance D: $D(V(z)) = f_{P_1}(V(z)) \sim b_D^{-V(z)}$.

7. Device according to any one of claims 1 to 6, **characterised in that** the measurement element (20) has a carrier element (21) and **in that** the two electrodes (30a, b) are arranged at opposing sides of the carrier element (21).

8. Device according to any one of claims 1 to 7, **characterised in that** the measurement element (20) is arranged in the fluid container (5) in such a manner that the wide second electrode end (32) is located in the upper position.

9. Measurement device according to any one of claims 1 to 8, **characterised in that** the measurement element (20) is integrated in the wall (6a) of the fluid container (5).

10. Measurement device according to any one of claims 1 to 9, **characterised in that** the fluid container (5) is an inlet funnel-like member (5a) of a water filter device (1).

11. Device according to any one of claims 1 to 10, **characterised in that** the evaluation device (12) is connected to a display unit (13).

12. Device according to any one of claims 1 to 11, **characterised in that** at least the voltage source, the evaluation device (12) and the at least one measurement element (20) are integrated in a structural unit.

13. Device according to claim 12, **characterised in that** the display unit (13) is integrated in the structural unit.

14. Device according to any one of claims 1 to 13, **characterised in that** at least one element, which changes the path of the electrical field lines (36) which are formed between the two electrodes (30a, 30b), is/are arranged between the two electrodes (30a, 30b).

15. Device according to claim 14, **characterised in that** the element has a shape so that the path of the electrical field lines (36) decreases exponentially as the value z increases.

16. Device according to either claim 14 or claim 15, **characterised in that** the element is a plate (26, 26a-d) whose free front side (27) has a curved path.

17. Device according to any one of claims 14 to 16, **characterised in that** the two electrodes (30a, 30b) are arranged beside each other on a carrier element (21), and **in that** the plate (26, 26a-d) is arranged between the two electrodes (30a, b).

18. Device according to any one of claims 14 to 16, **characterised in that** the two electrodes (30a, b) are arranged at opposing sides on a carrier element (21) and **in that** a plate (26, 26a-d) is arranged laterally adjacent to each electrode (30a, b), respectively.

19. Device according to claim 17 or claim 18, **characterised in that** the plate (26, 26a-d) is arranged perpendicularly relative to the carrier element (21).

20. Use of the device (10) according to any one of claims 1 to 19 as an occupied volume measurement device for filter cartridges (50).

21. Use according to claim 20, **characterised in that** the measurement device (10) has a display unit (13) which displays the exchange time for the filter cartridge (50).

22. Measurement element for establishing a filling level-dependent measurement value of electrically conductive fluids having at least one elongate electrode (30a, b), **characterised in that** the surface-area A of the electrode (30a, b) increases exponentially as the distance z from the first electrode end (31) to the second electrode end (32) increases.

23. Measurement element according to claim 22, **characterised in that** the following applies to the surface-area A of the electrode (30a, b): $A(V(z)) \sim b^z{}_{A_2}$, with $0 < b_{A_2} \le 5$ and $b_{A_2} \ne 1$ and z being in cm.

24. Measurement element according to claim 22 or claim 23, **characterised in that** the following applies to the surface-area A of the electrode (30a, b): $A(V(z)) \sim b^z{}_{A_2}$ with $1 < b_{A_2} \le 1.5$ and z being in cm.

25. Measurement element according to any one of claims 22 to 24, **characterised in that** the width B of the electrode (30a, b) changes in steps (38).

26. Measurement element according to any one of claims 22 to 25, **characterised in that** the width B1 at the first electrode end (31) is from 0.1 mm to 20 mm.

27. Measurement element according to any one of claims 22 to 26, **characterised in that** the width B2 at the second electrode end (32) is from 5 mm to 30 mm.

28. Measurement element according to any one of claims 22 to 27, **characterised in that** there is provided, at the first electrode end (31), a bar-like widening (35) which extends perpendicularly relative to the electrode axis.

29. Measurement element according to any one of claims 22 to 28, **characterised in that** a contact element (33) adjoins an electrode end (31, 32).

30. Measurement element according to any one of claims 22 to 29, **characterised in that** the electrodes (30a, b) comprise a metal, a metal alloy, an electrically conductive plastics material or another conductive material.

31. Measurement element according to any one of claims 22 to 30, **characterised in that** at least one electrode (30a, b) is arranged on a carrier element (21).

32. Measurement element according to claim 31, **characterised in that** the carrier element is the wall (6a) of a fluid container (5).

33. Measurement element according to claim 31, **characterised in that** the carrier element is a carrier plate (21), at each of the two opposing sides of which an electrode (30a, b) is arranged.

34. Measurement element according to any one of claims 31 to 33, **characterised in that** both electrodes (30a, b) are identical.

35. Measurement element according to either claim 33 or claim 34, **characterised in that** the carrier plate (21) has a double T-like cross-section.

36. Measurement element according to any one of claims 31 to 35, **characterised in that** the carrier plate (21) has two feet (22a, b) adjacent to the first electrode end (31).

37. Measurement element according to any one of claims 22 to 36, **characterised in that** the electrodes (30a, b) comprise an electrically conductive plastics material and the carrier plate (21) comprises a non-conductive plastics material.

38. Measurement element according to any one of claims 22 to 37, **characterised in that** it is a two-part injection moulding component.

39. Method for establishing the total flow rate dV of electrically conductive fluids having conductivity LF through a container with filling levels which are variable in a vertical direction (z direction) by means of a container and a conductivity measurement device, **characterised by** the following steps:

- configuring at least the container and/or the conductivity measurement device in such a manner that it/they can be described by at least one parameter function $f_{P_1}(V(z))$ which is dependent on V(z), with l = 1 ...m,
- adapting the at least one parameter function $f_{P_1}(V(z))$ in such a manner that the following applies to the measurement values provided by the conductivity measurement device:

$$M(V(z)) \sim LF \cdot f_M(V(z)) \sim f(f_{P_i}(V(z))) \sim b_M^{V(z)},$$

- carrying out a measurement in order to establish the basis $b_M$,
- establishing measurement values $M_{t_i}(V(z))$ at time intervals of $t_i - t_{i-1}$, with i = 1 ...n,
- forming a quotient $M_{t_{i+1}}/M_{t_i}$ and logarithmising the quotient in order to establish $dV_i$ and
- adding the n values $dV_i$ in order to establish the total flow rate dV.

40. Method according to claim 39, **characterised in that** the measurement values $M_{t_i}$ are established at a time interval of from 1 to 100 seconds.

**41.** Method according to claim 39 or claim 40, **characterised in that** the measurement values $M_{t_i}$ are established at time intervals of from 1 to 20 seconds, preferably from 2 to 10 seconds.

**Revendications**

**1.** Dispositif de mesure (10) pour déterminer des débits dV(z) de liquides électroconducteurs avec la conductivité LF à travers un récipient (5) avec des niveaux de remplissage variables dans la direction verticale (direction z), comprenant

- un récipient (5) présentant une paroi de fond (6b) et une entrée et une sortie (7a, b), et
- un dispositif de conductimétrie (10a) comprenant les composants suivants :

- une source de tension,
- un dispositif d'évaluation (12), et
- au moins un élément de mesure (20),

- qui est disposé dans le récipient (5) et est connecté au dispositif d'évaluation (12), et
- qui présente au moins deux électrodes (30a, b) s'étendant dans la direction z, qui sont disposées en étant espacées l'une de l'autre perpendiculairement à la direction z, dans lequel $z_{max}$ désigne l'écartement entre la première extrémité d'électrode inférieure (31) (z = 0) et la deuxième extrémité d'électrode supérieure (32),

**caractérisé en ce que**
le dispositif de conductimétrie (10a) fournit à des intervalles de temps $t_i - t_{i-1}$, avec i = 1 ... n des valeurs mesurées $M_{t_i}(V) = M(V(z)) \sim LF \cdot f_M(V(z))$,
**en ce qu'**au moins le récipient (5) et/ou le dispositif de conductimétrie (10a) est/sont conçu(s) de telle sorte qu'il(s) peut/peuvent être décrit(s) par au moins une fonction paramétrique $f_{P_1}(V(z))$, avec l = 1 ... m, dépendante de V(z), de sorte que :

$$f_M(V(z)) \sim f(f_{P_1}(V(z), \text{ avec } l = 1 \ldots m)) \sim b_M^{V(z)}$$

où $b_M$ est un nombre $\neq 0$ et $\neq 1$,
et **en ce que** le dispositif d'évaluation (12) est réalisé au moins pour la formation des quotients des valeurs mesurées et pour le calcul logarithmique des quotients.

**2.** Dispositif selon la revendication 1, **caractérisé en ce que** pour au moins une fonction paramétrique ou obtient :

$$f_{P_1}(V(z)) \sim b_{P_1}^{V(z)},$$

de préférence avec

$$0 < b_{P_1} \leq 5 \text{ et } b_{P_1} \neq 1,$$

et z en cm.

**3.** Dispositif selon la revendication 2, **caractérisé en ce qu'**au moins un paramètre $P_1$ est choisi de telle sorte que $f_{P_1}(V(z)) \sim b_{P_1}^{V(z)}$, de préférence avec $1 < b_{P_1} \leq 1,5$, et z en cm.

**4.** Dispositif selon l'une des revendications 1 à 3, **caractérisé en ce que** le paramètre $P_1$ est la superficie A d'au moins une électrode (30a, b) et **en ce que** pour la superficie A on a : $A(V(z)) = f_{P_1}(V(z)) \sim b_{A_1}^{V(z)}$.

5. Dispositif de mesure selon l'une des revendications 1 à 4, **caractérisé en ce que** le paramètre $P_l$ est la forme de récipient F déterminant le volume de remplissage, et **en ce que** pour la forme de récipient on a : $F(V(z)) = f_{P_1} (V(z)) \sim b_F^{V(z)}$.

6. Dispositif selon l'une des revendications 1 à 5, **caractérisé en ce que** le paramètre $P_l$ est l'écartement D des électrodes (30a, b), et **en ce que** pour l'écartement D on a : $D(V(z)) = f_{P_1} (V(z)) \sim b_D^{-V(z)}$.

7. Dispositif selon l'une des revendications 1 à 6, **caractérisé en ce que** l'élément de mesure (20) présente un élément de support (21), et **en ce que** les deux électrodes (30a, b) sont disposées sur des côtés opposés de l'élément de support (21).

8. Dispositif selon l'une des revendications 1 à 7, **caractérisé en ce que** l'élément de mesure (20) est disposé dans le récipient pour liquide (5) de telle sorte que la deuxième extrémité d'électrode large (32) se trouve en haut.

9. Dispositif de mesure selon l'une des revendications 1 à 8, **caractérisé en ce que** l'élément de mesure (20) est intégré dans la paroi (6a) du récipient pour liquide (5).

10. Dispositif de mesure selon l'une des revendications 1 à 9, **caractérisé en ce que** le récipient de liquide (5) est un entonnoir d'entrée (5a) d'un dispositif de filtration d'eau (1).

11. Dispositif selon l'une des revendications 1 à 10, **caractérisé en ce que** le dispositif d'évaluation (12) est connecté à une unité d'affichage (13).

12. Dispositif selon l'une des revendications 1 à 11, **caractérisé en ce qu'**au moins la source de tension, le dispositif d'évaluation (12) et ledit au moins un élément de mesure (20) sont intégrés dans une unité modulaire.

13. Dispositif selon la revendication 12, **caractérisé en ce que** l'unité d'affichage (13) est intégrée dans l'unité modulaire.

14. Dispositif selon l'une des revendications 1 à 13, **caractérisé en ce qu'**entre les deux électrodes (30a, 30b) au moins un élément est disposé qui change le parcours des lignes de champ électrique (36) qui se forment entre les deux électrodes (30a, 30b).

15. Dispositif selon la revendication 14, **caractérisé en ce que** l'élément présente une forme de telle sorte que le parcours des lignes de champ électrique (36) diminue de façon exponentielle lorsque la valeur z augmente.

16. Dispositif selon l'une des revendications 14 ou 15, **caractérisé en ce que** l'élément est une plaque (26, 26a à d) dont le bord avant libre (27) présente un tracé courbe.

17. Dispositif selon l'une des revendications 14 à 16, **caractérisé en ce que** les deux électrodes (30a, 30b) sont disposées côte à côte sur un élément de support (21), et **en ce que** la plaque (26, 26a à d) est disposée entre les deux électrodes (30a, b).

18. Dispositif selon l'une des revendications 14 à 16, **caractérisé en ce que** les deux électrodes (30a, b) sont disposées sur des côtés opposés sur un élément de support (21), et **en ce que** respectivement une plaque (26, 26a à d) est disposée de façon latéralement adjacente à chaque électrode (30a, b).

19. Dispositif selon la revendication 17 ou 18, **caractérisé en ce que** la plaque (26, 26a à d) est disposée perpendiculairement à l'élément de support (21).

20. Utilisation du dispositif (10) selon l'une quelconque des revendications 1 à 19 comme dispositif de mesure de charge volumétrique pour des cartouches de filtre (50).

21. Utilisation selon la revendication 20, **caractérisée en ce que** le dispositif de mesure (10) présente une unité d'affichage (13) qui affiche la date de remplacement pour la cartouche de filtre (50).

22. Elément de mesure pour la détermination d'une valeur mesurée dépendant du niveau de remplissage de liquides électroconducteurs avec au moins une électrode allongée (30a, b), **caractérisé en ce que** la superficie A de l'électrode (30a, b) augmente de façon exponentielle lorsque l'écartement z entre la première extrémité d'électrode (31) et la deuxième extrémité d'électrode (32) augmente.

23. Elément de mesure selon la revendication 22, **caractérisé en ce que** pour la superficie A de l'électrode (30a, b) on a : A(V(z)) - $b_{A_2}$, avec $0 < b_{A_2} \leq 5$ et $b_{A_2} \neq 1$, et z en cm.

24. Elément de mesure selon la revendication 22 ou 23, **caractérisé en ce que** pour la superficie A de l'électrode (30a, b) on a : A(V(z)) - $b_{A_2}{}^Z$, avec

$$1 < b_{A_2} \leq 1,5,$$

et z en cm.

25. Elément de mesure selon l'une des revendications 22 à 24, **caractérisé en ce que** la largeur B de l'électrode (30a, b) change par marche (38).

26. Elément de mesure selon l'une des revendications 22 à 25, **caractérisé en ce que** la largeur B1 à la première extrémité d'électrode (31) mesure de 0,1 mm à 20 mm.

27. Elément de mesure selon l'une des revendications 22 à 26, **caractérisé en ce que** la largeur B2 à la deuxième extrémité d'électrode (32) mesure de 5 mm à 30 mm.

28. Elément de mesure selon l'une des revendications 22 à 27, **caractérisé en ce qu'**un élargissement de type poutre (35) s'étendant perpendiculairement à l'axe d'électrode est prévu à la première extrémité d'électrode (31).

29. Elément de mesure selon l'une des revendications 22 à 28, **caractérisé en ce qu'**une extrémité d'électrode (31, 32) se prolonge par un élément de contact (33).

30. Elément de mesure selon l'une des revendications 22 à 29, **caractérisé en ce que** les électrodes (30a, b) se composent d'un métal, d'un alliage de métal, d'une matière plastique électroconductrice ou d'un autre matériau conducteur.

31. Elément selon l'une des revendications 22 à 30, **caractérisé en ce qu'**au moins une électrode (30a, b) est disposée sur un élément de support (21).

32. Elément de mesure selon la revendication 31, **caractérisé en ce que** l'élément de support est la paroi (6a) d'un récipient pour liquide (5).

33. Elément de mesure selon la revendication 31, **caractérisé en ce que** l'élément de support est une plaque de support (21) sur les deux côtés opposés de laquelle est respectivement disposée une électrode (30a, b).

34. Elément de mesure selon l'une des revendications 31 à 33, **caractérisé en ce que** les deux électrodes (30a, b) sont identiques.

35. Elément de mesure selon l'une des revendications 33 ou 34, **caractérisé en ce que** la plaque de support (21) présente une section transversale en double T.

36. Elément de mesure selon l'une des revendications 31 à 35, **caractérisé en ce que** la plaque de support (21) présente deux pieds (22a, b) de façon adjacente à la première extrémité d'électrode (31).

37. Elément de mesure selon l'une des revendications 22 à 36, **caractérisé en ce que** les électrodes (30a, b) se composent d'une matière plastique électroconductrice et la plaque de support (21) d'une matière plastique non conductrice.

38. Elément de mesure selon l'une des revendications 22 à 37, **caractérisé en ce qu'**il s'agit d'une pièce moulée par injection à deux composants.

**39.** Procédé de détermination du débit total dV de liquides électroconducteurs de la conductibilité LF à travers un récipient, avec des niveaux de remplissage variables dans la direction verticale (direction z), au moyen d'un récipient et d'un dispositif de conductimétrie, **caractérisé par** les étapes suivantes consistant à :

- concevoir au moins le récipient et/ou le dispositif de conductométrie de telle sorte qu'il(s) peut/peuvent être décrit(s) par au moins une fonction paramétrique $f_{P_l}$ (V(z)), avec l = 1 ... m, dépendante de V(z),
- accorder ladite au moins une fonction paramétrique $f_{P_l}$ (V(z)) de telle sorte que pour les valeurs mesurées fournies par le dispositif de conductométrie on a :

$$M(V(z)) \sim LF \cdot f_M(V(z)) \sim f(f_{P_l}(V(z))) \sim b_M^{V(z)},$$

- exécuter une mesure pour déterminer la base $b_M$,
- déterminer des valeurs mesurées $M_l(V(z))$ dans des intervalles de temps $t_i - t_{i-1}$, avec i = 1 ... n,
- former des quotients $M_{t_{i+1}} / M_{t_i}$ et effectuer un calcul logarithmique des quotients pour déterminer $dV_i$, et
- additionner les n valeurs $dV_i$ pour déterminer le débit total dV.

**40.** Procédé selon la revendication 39, **caractérisé en ce que** les valeurs mesurées $M_{t_i}$ sont déterminées dans un intervalle de temps de 1 à 100 s.

**41.** Procédé selon la revendication 39 ou 40, **caractérisé en ce que** les valeurs mesurées $M_{t_i}$ sont déterminées dans des intervalles de temps de 1 à 20 s, de préférence de 2 à 10 s.

# Fig. 1

# Fig. 2

# Fig. 4

# Fig. 3

**Fig. 5a**

**Fig. 5b**

**Fig. 6**

**Fig. 8**

**Fig. 7**

**Fig. 9**

EP 1 907 803 B1

Fig. 10

Beispiel für Messwerte in Abhängigkeit des Füllstandes

Messwert [dimensionslos]

Hohe Leitfähigkeit

Mittlere Leitfähigkeit

Niedrige Leitfähigkeit

Volumen [l]

26

Fig. 11a

Fig. 11b

Fig. 12 a

Fig. 12 b

Fig. 12c

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19726044 A1
- DE 4042257
- DE 3018718
- JP 08050047 A
- JP 2004077439 A
- EP 1484097 A1
- WO 0174719 A
- EP 1125748 A1
- GB 1288177 A